# EUROPÄISCHE PATENTSCHRIFT

(11) **EP 1 024 156 B1**
(45) Veröffentlichungstag und Bekanntmachung des Hinweises auf die Patenterteilung: **02.03.2005**
(21) Anmeldenummer: 00100277.3
(22) Anmeldetag: 19.01.2000
(51) Int. Cl.: C08G 18/10, C08G 18/76

(54) **Polyurethan-Giesselastomere auf Basis von Duroldiisocyanat**
Polyurethane casting elastomers based on durol diisocyanate
Elastomères coulés de polyuréthane à base de durol diisocyanate

(30) Priorität: 30.01.1999 DE 19903711
(43) Veröffentlichungstag der Anmeldung: 02.08.2000
(73) Patentinhaber: Bayer MaterialScience AG, 51368 Leverkusen (DE)
(72) Erfinder: Heitkämper, Peter, Dr., 41542 Dormagen (DE); Jost, Klaus, Dr., 41539 Dormagen (DE); Mayer, Eduard, Dr., 41539 Dormagen (DE); Münzmay, Thomas, Dr., 41539 Dormagen (DE); Wagner, Joachim, Dr., 51061 Köln (DE); Wolfrum, Christian, Dr., 51061 Köln (DE)

(56) Entgegenhaltungen:
- DE-C- 955 094
- US-A- 3 062 772
- US-A- 3 105 845

## Beschreibung

Die vorliegende Erfindung betrifft Polyurethan-Gießelastomere auf Basis von Duroldiisocyanat, deren Herstellung sowie deren Verwendung zur Herstellung von mechanisch hoch belastbaren Formteilen.

Polyurethan-Gießelastomere (PU-Elastomere) sind seit langem bekannt und in zahlreichen Patent- und Literaturveröffentlichungen beschrieben.

Eine Übersicht über PU-Elastomere, ihre Eigenschaften und Anwendungen wird beispielsweise im Kunststoff-Handbuch, Band 7, Polyurethane, 3., neu bearbeitete Auflage, Band 193, herausgegeben von Prof. Dr. G.W. Becker und Prof. Dr. D. Braun (Carl-Hanser-Verlag, München, Wien) gegeben.

Zur Herstellung von Polyurethanelastomeren mit hochwertigen mechanischen Eigenschaften hat sich das 1,5-Diisocyanatonaphthalin (1,5-NDI) als Isocyanatbaustein für die Elastomeren erwiesen.

Da das 1,5-NDI wegen seines relativ hohen Schmelzpunktes nicht einfach handhabbar ist, hat es nicht an Versuchen gefehlt, das 1,5-NDI durch leichter handhabbare und preisgünstigere Diisocyanate zu substituieren, ohne dabei das günstige Eigenschaftsbild, das bei PU-Elastomeren auf Basis von 1,5-NDI erhalten wird, zu beeinträchtigen.

In diesem Zusammenhang sind insbesondere die Deutschen Offenlegungsschriften DE 19 627 907, 19 628 145 und 19 628 146 zu nennen, gemäß denen versucht wird, das 1,5-NDI durch andere Diisocyanate zu ersetzen, die geeignet sein sollen, kompakte oder zellige PU-Elastomere mit einem vergleichbar günstigen mechanischen Eigenschaftsbild zur Verfügung zu stellen.

Sowohl bei der Verwendung von 1,5-NDI als Isocyanataufbaukomponente für PU-Elastomere als auch bei Verwendung der gemäß den obengenannten Deutschen Offenlegungsschriften vorgestellten Diisocyanate, das sind 4,4'-Stilbendiisocyanat, 3,3'-Dimethoxy-4,4'-diisocyanato-diphenyl und 1,4-Phenylendiisocyanat mit mindestens einem zusätzlichen aromatischen Diisocyanat ausgewählt u.a. aus der Gruppe Toluylen-diisocyanat und Diphenylmethan-diisocyanat, besteht nach wie vor noch der Nachteil, daß die Farbstabilität der Elastomeren bei Verwendung der genannten Isocyanataufbaukomponenten noch nicht als befriedigend angesehen werden kann. Darüber hinaus bedarf es noch einer Verbesserung der Lagerstabilität für die Prepolymere auf Basis der obengenannten Isocyanat-Aufbaukomponenten, wenn die Polyurethangießelastomeren mit Hilfe des Prepolymerisationsverfahrens hergestellt werden.

Aufgabe der vorliegenden Erfindung ist es nun, neue Polyurethan-Gießelastomere zur Verfügung zu stellen, die eine erhöhte Farbstabilität aufweisen, verbunden mit hochwertigen mechanischen Eigenschaften. Darüber hinaus sollen die PU-Gießelastomere noch preisgünstig herstellbar sein. Eine weitere Forderung ist, falls die Prepolymertechnik bei der Herstellung der Gießelastomere angewendet wird, daß die den Gießelastomeren zugrundeliegenden Prepolymere eine hohe Lagerstabilität zeigen, was auf eine längere, besonders anwenderfreundliche Verarbeitungszeit hinausläuft.

Gegenstand der Erfindung sind daher Polyurethan-Elastomere (PU-Elastomere) hergestellt aus
a) mindestens einer höhermolekularen Polyhydroxyverbindung mit einem mittleren Molekulargewicht von 500 bis 6000 und einer Funktionalität von mindestens 2,
b) 2,3,5,6-Tetramethyl-1,4-diisocyanatobenzol (Duroldiisocyanat) und
c) mindestens einem niedermolekularen Kettenverlängerungs- und/oder Vernetzangsmittel mit mindestens zwei Hydroxylgruppen und einem mittleren Molekulargewicht von 18 bis 800.

Als höhermolekulare Hydroxyverbindungen kommen insbesondere solche in Betracht mit einem mittleren Molekulargewicht von 800 bis 4000, besonders bevorzugt von 1000 bis 3500.

Als höhermolekulare Polyhydroxyverbindungen sind prinzipiell alle Polyhydmxyverbindungen geeignet, die in der Polyurethanchemie Verwendung finden, insbesondere sind in Betracht zu ziehen Polyetherpolyole, Polyesterpolyole und Hydroxygruppen aufweisende Polycarbonate.

Die Polyester-, Polyether- und die Polycarbonatpolyole können sowohl einzeln als auch im Gemisch untereinander eingesetzt werden. Geeignete Polyester-, Polyetherund Polycarbonatpolyole, die zum Aufbau der erfindungsgemäßen PU-Elastomere Verwendung finden können, sind beispielsweise detailliert aufgelistet in DE 19 627 907, Seite 4 und Seite 5.

Bevorzugt werden als Polyesterkomponente solche eingesetzt, die sich aus Bernsteinsäure oder Adipinsäure sowie Ethylenglykol, Diethylenglykol, 1,4-Butandiol oder 1,6-Hexandiol aufbauen, ganz besonders bevorzugt solche, die sich aus Adipinsäure und Ethylenglykol aufbauen.

Als Polyetherpolyole werden bevorzugt Polyoxytetramethylenglykole eingesetzt.

Als Komponente c) (Kettenverlängerungs- und Vernetzungsmittel) können wiederum die aus der Polyurethanchemie bekannten Kettenverlängerungs- und Vemetzungsmittel eingesetzt werden, deren mittleres Molekulargewicht vorzugsweise 18 bis 400, insbesondere 60 bis 300, beträgt und die sich beispielsweise ableiten von Alkandiolen, Dialkylen-glykolen und Polyoxyalkylen-glykolen (Kettenverlängerungsmittel) und 3- oder 4-wertigen Alkoholen und oligomeren Polyoxyalkylen-polyolen mit einer Funktionalität von 3 bis 6 (Vernetzungsmittel). Verwiesen wird in diesem Zusammenhang wieder auf DE-A-19 627 907, Seite 5 und Seite 6. Besonders bevorzugt werden als Kettenverlängerungs- und Vernetzungsmittel (c) eingesetzt: Ethylenglykol, Diethylenglykol, 1,4-Butandiol, 1,6-Hexandiol, Hydrochinonbis(2-hydroxyethyl)ether, 1,1,1-Tris(hydroxymethyl)-n-propan oder Wasser.

Selbstverständlich können die Kettenverlängerungs- und Vernetzungsmittel sowohl einzeln als auch im Gemisch untereinander eingesetzt werden, wobei sich der Einsatz der verschiedenen Kettenverlängerungs- und Vernetzungsmittel als auch der Einsatz der zuvor erwähnten höhermolekularen Polyhydroxyverbindungen nach dem gewünschten mechanischen Eigenschaftsbild der herzustellenden PU-Elastomere richtet.

Die erfindungsgemäßen PU-Elastomere auf Basis von Duroldiisocyanat können sowohl als kompakte Elastomere als auch in zellularer Form erhalten werden.

Zur Einstellung der mechanischen Eigenschaften, beispielsweise der Härte bei den PU-Elastomeren, können die Aufbaukomponenten a) bis c) in breiten Mengenverhältnissen variiert werden, wobei die Härte mit zunehmendem Gehalt an difunktionellen Kettenverlängerungs- und mindestens trifunktionellen Vernetzungsmitteln im PU-Elastomeren ansteigt. In Abhängigkeit von der gewünschten Härte können die erforderlichen Mengen der Aufbaukomponenten in einfacher Weise experimentell ermittelt werden. Vorzugsweise verwendet man für die Herstellung von kompakten PU-Elastomeren die Aufbaukomponente a) in Mengen von 30 bis 96 Gew-%, insbesondere 55 bis 90 Gew.-%, die Aufbaukomponente b) in Mengen von 5 bis 40 Gew.-%, insbesondere 10 bis 25 Gew.-% und die Komponente c) in Mengen von 0,5 bis 30 Gew.-%, insbesondere 1 bis 20 Gew.-%, jeweils bezogen auf die Gesamtheit der die Polymermatrix aufbauenden reaktiven Komponenten.

Für die Herstellung von zellig aufgebauten PU-Elastomeren beträgt die Menge an Komponente a) 46 bis 96 Gew.-%, vorzugsweise 65 bis 90 Gew.-%, die Menge an Komponente b) 5 bis 40 Gew.-%, bevorzugt 10 bis 25 Gew.-%, und die Menge an Komponente c) 0,1 bis 20 Gew.-%, vorzugsweise 0,2 bis 10 Gew.-%, jeweils bezogen auf die Gesamtheit der die Polymermatix aufbauenden reaktiven Komponenten.

Selbstverständlich können den erfindungsgemäßen PU-Elastomeren noch die in der Polyurethan-Chemie üblichen Zusatzstoffe einverleibt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungsmittel, Farbstoffe und Pigmente, darüber hinaus bei zelligen PU-Elastomeren Schaumstabilisatoren und Zellregler. Verwiesen wird in diesem Zusammenhang auf DE-A 19 627 907, Seiten 8 und 9.

Bevorzugt werden die PU-Elastomere nach dem sogenannten Prepolymerisationsverfahren hergestellt, indem man das Duroldiisocyanat in Form eines Isocyanatgruppen aufweisenden Prepolymeren verwendet. Dieses Prepolymere kann beispielsweise hergestellt werden durch Umsetzung des Duroldiisocyanats mit mindestens einer höhermolekularen Polyhydroxyverbindung a) oder einer Mischung aus a) und mindestens einem Kettenverlängerungsmittel und/oder mindestens einem Vernetzungsmittel c) oder durch stufenweise Umsetzung des Duroldiisocyanats mit mindestens einer höhermolekularen Polyhydroxyverbindung a) und anschließend mit mindestens einem Kettenverlängerungs- und/oder Vernetzungsmittel.

Man geht dabei vorzugsweise so vor, daß man die genannten Polyolkomponenten mit dem Duroldiisocyanat zu einem Prepolymer umsetzt, das einen Isocyanatgehalt von 1 bis 19 %, bevorzugt 2 bis 10 %, insbesondere 2 bis 7 % aufweist. Das so erhaltene Isocyanat-terminierte Prepolymer wird wie zuvor beschrieben mit der Komponente c) in einem solchen Mengenverhältnis umgesetzt, so daß eine Kennzahl von 0,9 bis 1,3, bevorzugt 0,95 bis 1,2, besonders bevorzugt von 1,0 bis 1,2, resultiert.

Für die Herstellung des Prepolymers als auch für die Umsetzung des Prepolymers mit dem erwähnten Kettenverlängerungsmittel und/oder dem Vernetzungsmittel ist es hilfreich, Katalysatoren zuzugeben.

Als Katalysatoren zur Herstellung sowohl der Prepolymeren als auch der fertigen PU-Elastomere kommen prinzipiell alle in der PU-Chemie bekannten Katalysatoren in Betracht, beispielsweise organische Metallverbindungen, vorzugsweise organische Zinnverbindungen, wie Zinn-(II)-Salz von organischen Carbonsäuren, z.B. Zinn-(II)-acetat, Zinn-(II)-octoat, Zinn-(II)-ethylhexoat und Zinnlaurat und die Dialkylzinn-(IV)-Salze von organischen Carbonsäuren, z.B. Dibutylzinndiacetat, Dibutylzinndilaurat, Dibutylzinn-maleat und Dioctylzinn-diacetat. Die organischen Metallverbindungen werden allein oder in Kombination mit stark basischen Aminen eingesetzt, wie Amidinen, tertiären Aminen, Teh-aalkylendiaminen, Alkanolaminverbindungen. Verwiesen wird in diesem Zusammenhang wieder auf DE-A 19 627 907, Seite 7. Darüber hinaus sind auch Alkali- und Erdalkalisalze von organischen Carbonsäuren als Katalysatoren geeignet.

Als Katalysatoren zur Herstellung von zelligen PU-Elastomeren werden bevorzugt Natrium- und Kalium-Salze von Carbonsäuren verwendet, beispielsweise Natriumacetat, Kaliumacetat, Natriumoleat und Kaliumoleat.

Die Menge an Katalysator beträgt üblicherweise 0,001 bis 3 Gew.-%, bevorzugt 0,001 bis 1 Gew.-%, bezogen auf die Aufbaukomponenten a) + b).

Zur Herstellung von kompakten, massiven PU-Elastomeren wird die Umsetzung der Komponenten a) bis c) in Abwesenheit von Feuchtigkeit sowie physikalisch oder chemisch wirkenden Treibmitteln durchgeführt. Sollen zellige PU-Elastomere hergestellt werden, wird die Umsetzung der genannten Aufbaukomponenten in Gegenwart eines Treibmittels durchgeführt. Als Treibmittel können beispielsweise verwendet werden Wasser oder niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C besitzen, oder Gase als physikalisch wirkende Treibmittel oder chemisch wirkende Treibmittel. Selbstverständlich können die niedrigsiedenden Flüssigkeiten in Kombination mit Wasser als Treibmittel eingesetzt werden. Als Treibmittel geeignete Flüssigkeiten der obengenannten Art und Gase kommen alle bekannten für die Herstellung von zelligen PU-Formkörpern bekannten Treibmittel in Betracht, beispielsweise niedrigsiedende Alkane, Ether, Alkohole sowie die bekannten halogenierten, bevorzugt fluorierten Alkane, darüber hinaus Gase wie Stickstoff, Kohlendioxid und Edelgase. Für die Herstellung von zelligen PU-Elastomeren geeignete Treibmittel sind beispielsweise detailliert aufgeführt in DE-A-19 627 907, Seite 8. Die Herstellung der kompakten oder zelligen PU-Elastomere kann wie erwähnt in bevorzugter Weise nach dem Prepolymerisationsverfahren durchgeführt werden, selbstverständlich ist es auch möglich, daß die PU-Elastomeren nach anderen üblichen Verfahrenstechniken für Polyurethane hergestellt werden. Zu Einzelheiten der Herstellungsweise von kompakten oder zelligen PU-Elastomeren verweisen wir wiederum auf DE-A 19 627 907, Seite 9 und 10.

Die erfindungsgemäßen kompakten PU-Elastomeren besitzen ohne Füllstoff eine Dichte von 1,0 bis 1,4 g/cm³, vorzugsweise von 1,1 bis 1,3 g/cm³, wobei Füllstoff enthaltende Produkte üblicherweise eine Dichte >1,2 g/cm³ aufweisen. Die zelligen PU-Elastomere zeigen eine Dichte von 0,2 bis 1,1 g/cm³, vorzugsweise von 0,35 bis 0,80 g/cm³.

Die nach dem erfindungsgemäßen Verfahren hergestellten PU-Elastomere finden Verwendung zur Herstellung von mechanisch hochbelastbaren Formkörpern, vorzugsweise für den Maschinenbau und den Verkehrsmittelsektor, beispielsweise Rollen, Transportbänder, Zahnräder und Dichtungen. Die zelligen PU-Elastomeren eignen sich insbesondere zur Herstellung von Dämpfungs- und Federelementen.

### Beispiele

### Allgemeine Durchführung:

In einem Planschliffbecher aus Glas wurde ein Polyester aus Adipinsäure und Ethylenglykol (OH-Zahl 56 mg KOH/g; Säurezahl 0,8 mg KOH/g) vorgelegt und 30 Minuten bei 120°C und 20 mbar entwässert. Dann wurde unter Rühren Duroldiisocyanat bzw. (für Vergleichsbeispiele) 1,5-Diisocyanatonaphthalin (1,5-NDI) sowie gegebenenfalls Dibutylzinndilaurat als Katalysator zugegeben. Zur Umsetzung wurde das Gemisch auf 145°C erhitzt und 15 Minuten bei Normaldruck und dann 15 Minuten bei 20 mbar gerührt. Anschließend wurde das Gemisch auf 130°C abgekühlt, zur Kettenverlängerung mit 1,4-Butandiol versetzt und 2 Minuten bei 20 mbar gerührt. Dann wurde das Produkt in eine auf 120°C vorgeheizte Prüfkörperform gegossen und 4 Stunden bei 120°C getempert. Nach dem Entformen wurde der Prüfkörper noch 20 Stunden bei 120°C getempert und anschließend vermessen.

Die Werte sind in den Tabellen 1 und 2 zusammengestellt, die auch die Werte der Vergleichsversuche enthalten.

**Tabelle 1**

| **Beispiel** | | **1 (Vergleich)** | **2** |
|---|---|---|---|
| Einsatz (g) | Polyester | 166,68 | 166,93 |
| | Duroldiisocyanat | 0,00 | 30,05 |
| | 1,5-Diisocyanatonaphthalin (1,5-NDI) | 30,00 | 0,00 |
| | Dibutylzinndilaurat | 0,00 | 0,10 |
| | 1,4-Butandiol | 3,32 | 3,02 |
| Prüfkörper-Eigenschaften | Härte (Shore A) | 80 | 73 |
| | Glastemperatur (°C) | -29 | -30 |
| | Zugfestigkeit nach DIN 53 455 (MPa) | 47 | 43 |
| | Bruchdehnung nach DIN 53 455 (%) | 620 | 700 |
| | E-Modul (20°C) nach DIN 53 440 (MPa) | 60 | 40 |
| | E-Modul (150°C) nach DIN 53 440 (MPa) | 30 | 40 |
| | Wärmestand aus E-Modul = 1 MPa (°C) | 210 | 215 |
| | Farbe nach 3 Monaten Lagerung | Braunviolett | farblos |

**Tabelle 2**

| **Beispiel** | | **3 (Vergleich)** | **4** |
|---|---|---|---|
| Einsatz (g) | Polyester | 145,99 | 146,24 |
| | Duroldiisocyanat | 0,00 | 43,87 |
| | 1,5-Diisocyanatonaphthalin | 43,80 | 0,00 |
| | Dibutylzinndilaurat | 0,00 | 0,10 |
| | 1,4-Butandiol | 10,22 | 9,74 |
| Prüfkörper-Eigenschaften | Härte (Shore A) | 92 | 89 |
| | Glastemperatur (°C) | -28 | -31 |
| | Zugfestigkeit nach DIN 53 455 (MPa) | 50 | 40 |
| | Bruchdehnung nach DIN 53 455 (%) | 540 | 600 |
| | E-Modul (20°C) nach DIN 53 440 (MPa) | 130 | 100 |
| | E-Modul (150°C) nach DIN 53 440 (MPa) | 120 | 95 |
| | Wärmestand aus E-Modul = 1 MPa (°C) | 240 | 230 |
| | Farbe nach 3 Monaten Lagerung | Braunviolett | farblos |

**Ergebnis:** Die mechanischen Eigenschaften der erfindungsgemäßen Gießelastomere entsprechen dem hervorragenden Nievau der NDI-Elastomeren; die erfindungsgemäßen Produkte sind aber farbstabil.

## Patentansprüche

1. Polyurethan-Gießelastomere hergestellt aus
a) mindestens einer höhermolekularen Polyhydroxyverbindung mit einem mittleren Molekulargewicht von 500 bis 6000 und einer Funktionalität von mindestens 2,
b) Duroldiisocyanat sowie
c) mindestens einem niedermolekularen Kettenverlängerungs- und/oder Vernetzungsmittel mit mindestens zwei Hydroxylgruppen und einem mittleren Molekulargewicht von 18 bis 800.

2. Verfahren zur Herstellung von Polyurethan-Gießelastomeren gemäß Anspruch 1, **dadurch gekennzeichnet, daß** man die höhermolekularen Polyhydroxyverbindungen gegebenenfalls mit einem Teil der niedermolekularen Kettenverlängerungs- und/oder Vernetzungsmitteln zunächst mit dem Duroldiisocyanate nach dem Prepolymerisationsverfahren zu einem Isocyanat-terminierten Prepolymer umsetzt und anschließend dieses Prepolymer mit den restlichen Kettenverlängerungs- und/oder Vernetzungsmitteln und/oder höher molekularen Polyhydroxyverbindungen reagieren läßt.

3. Verwendung von Polyurethan-Gießelastomeren nach Anspruch 1 zur Herstellung von mechanisch hoch belastbaren Formkörpern.

## Claims

1. Polyurethane casting elastomers prepared from
a) at least one higher molecular weight polyhydroxy compound with an average molecular weight of 500 to 6,000 and a functionality of at least 2,
b) durol diisocyanate and
c) at least one low molecular weight chain-lengthening and/or crosslinking agent with at least two hydroxyl groups and an average molecular weight of 18 to 800.

2. Process for the preparation of polyurethane casting elastomers according to claim 1, **characterized in that** the higher molecular weight polyhydroxy compounds are first reacted with the durol diisocyanate by the prepolymerization process, optionally with a portion of the low molecular weight chain-lengthening and/or crosslinking agents, to give a prepolymer with isocyanate end groups, and this prepolymer is then allowed to react with the remaining chain-lengthening and/or crosslinking agents and/or higher molecular weight polyhydroxy compounds.

3. Use of polyurethane casting elastomers according to claim 1 for the production of shaped articles exposed to high mechanical stresses.

## Revendications

1. Elastomères coulés de polyuréthane préparés à partir
a) d'au moins un composé polyhydroxy de poids moléculaire élevé avec un poids moléculaire moyen de 500 à 6000 et une fonctionnalité d'au moins 2,
b) de diisocyanate de durène ainsi que
c) d'au moins un agent d'allongement de chaîne et/ou de réticulation de faible poids moléculaire avec au moins deux groupes hydroxyle et un poids moléculaire moyen de 18 à 800.

2. Procédé pour la préparation d'élastomères coulés de polyuréthane selon la revendication 1, **caractérisé en ce que** l'on fait réagir les composés polyhydroxy de poids moléculaire élevé éventuellement avec une partie des agents d'allongement de chaîne et/ou de réticulation de faible poids moléculaire tout d'abord avec le diisocyanate de durène après le procédé de prépolymérisation pour obtenir un prépolymère isocyanate-terminé et on laisse ensuite réagir ce prépolymère avec les agents d'allongement de chaîne et/ou de réticulation restants et/ou des composés polyhydroxy de poids moléculaire élevé.

3. Utilisation d'élastomères coulés de polyuréthane selon la revendication 1 pour la préparation de corps moulés pouvant supporter des charges mécaniques élevées.
